Europäisches Patentamt

European Patent Office

Office européen des brevets

(11) Numéro de publication: **0 228 943 B1**

# FASCICULE DE BREVET EUROPEEN

(45) Date de publication de fascicule du brevet: **11.03.92**   (51) Int. Cl.5: **A01N 37/40**

(21) Numéro de dépôt: **86402718.0**

(22) Date de dépôt: **09.12.86**

(54) **Produits herbicides à base d'esters d'oxynil.**

(30) Priorité: **09.12.85 FR 8518224**

(43) Date de publication de la demande:
**15.07.87 Bulletin 87/29**

(45) Mention de la délivrance du brevet:
**11.03.92 Bulletin 92/11**

(84) Etats contractants désignés:
**AT BE DE ES GB GR IT NL SE**

(56) Documents cités:
**EP-A- 0 031 684**
**FR-A- 2 556 933**

(73) Titulaire: **COMPAGNIE FRANCAISE DE PRO-DUITS INDUSTRIELS**
**28, Boulevard Camélinat**
**F-92233 Gennevilliers(FR)**

(72) Inventeur: **Schapira, Joseph**
**32, rue Miollis**
**F-75015 Paris(FR)**
Inventeur: **Pecheur, Jacques**
**6 Allée du Moulin Joly**
**F-92700 Colombes(FR)**
Inventeur: **Vincent, Jacques**
**21 F rue des Closeaux**
**F-78750 Mareil Marly(FR)**
Inventeur: **Droniou, Patrick**
**5 Ter, rue Tilly**
**F-92700 Colombes(FR)**

(74) Mandataire: **Koch, Gustave et al**
**Cabinet PLASSERAUD 84, rue d'Amsterdam**
**F-75009 Paris(FR)**

Rank Xerox (UK) Business Services

## Description

L'invention a pour objet des produits herbicides à base d'esters d'oxynil.

Elle vise également l'association des esters d'oxynil avec des esters d'acides phénoxy-alcanoïques.

Ces produits herbicides constituent des désherbants sélectifs utilisés principalement dans les cultures de céréales en vue de détruire ou maitriser les adventices à feuilles larges, notamment les dioctylédones.

Le terme générique "oxynil" désigne :
- le dibromo-3,5-hydroxy-4-benzonitrile ou "bromoxynil"
- le diiodo-3,5-hydroxy-4-benzonitrile ou "ioxynil"

qui sont des herbicides sélectifs connus et qui s'utilisent en général sous la forme de leurs esters de l'acide n'octanoïque.

Les acides phénoxy-alcanoïques entrant dans la susdite association sont généralement ceux connus sous les appellations

2,4-D

2,4-DP

2,4-MCPA et

Mecoprop

et ils sont utilisés la plupart du temps sous la forme de leurs esters isooctylique ou de butylglycol.

Les susdites associations peuvent se présenter soit sous l'aspect d'une seule et unique formulation concentrée comprenant le ou les oxynils et le ou les acides phénoxy-alcanoïques, soit sous l'aspect de deux formulations concentrées séparées dont le mélange est réalisé au moment de l'emploi par dispersion dans l'eau suivant les proportions souhaitées.

Dans les associations du genre en question qui sont déjà connues, les principes actifs sont formulés en solution dans des solvants hydrocarbonés et en proportion telle que l'on ait, à l'utilisation, pour une partie d'oxynil, entre 1 et 6 parties et le plus souvent entre 1 et 3 parties d acide phénoxy-alcanoïque.

Ces produits commerciaux contiennent souvent, outre les principes actifs herbicides et le solvant, un mélange d'agents tensio-actifs destiné à les rendre dispersables dans l eau sous forme d'une émulsion stable pendant une heure au minimum. Ils sont alors désignés sous le vocable de "concentrés émulsionnables".

Il a été indiqué plus haut que les esters d'oxynils sont la plupart du temps ceux de l'acide octanoïque.

On signale toutefois qu'il a déjà été proposé dans le commerce des mélanges d'esters n-octanoïque et n-butyrique de bromoxynil, associés à un ester d'acide phénoxyalcanoïque, notamment l'ester de butylglycol du 2,4-MCPA.

Dans le cadre de ses efforts constants visant à élargir l'arsenal des herbicides sélectifs pour céréales, la Société Demanderesse a constaté à présent que, de façon inattendue, un produit herbicide à efficacité herbicide particulièrement améliorée par rapport à celle des produits de l'art antérieur était celui à base de n-heptanoate et de n-butyrate d'oxynil éventuellement en association avec un ou plusieurs acides phénoxy-alcanoïques.

Il s'ensuit que les produits herbicides à base d'esters d'oxynil conformes à l'invention sont caractérisés par le fait qu'ils comprennent un mélange d'esters n-heptanoïque et n-butyrique de bromoxynil et/ou d'ioxynil associé à un ou plusieurs acides phénoxy-alcanoïques soit sous forme de sel, soit sous forme d'ester, le n-heptanoate de bromoxynil (ou d'ioxynil) et le n-butyrate de bromoxynil (ou d'ioxynil) se trouvant dans un rapport molaire de n-heptanoate de bromoxynil (ou d'ioxynil) au n-butyrate de bromoxynil (ou d'ioxynil) compris entre 0,25 et 10, de préférence entre 0,65 et 4.

Ces produits herbicides conformes à l'invention peuvent être utilisés notamment en désherbage sélectif des céréales d'hiver ou de printemps avec une meilleure destruction de la flore adventice aux doses habituellement utilisées pour de tels produits ou encore être utilisés, pour un résultat globalement équivalent de destruction de la flore adventice, à une dose inférieure à celles habituellement utilisées.

Le spectre global d'activité n'est pas fondamentalement changé, mais des plantes qui n'étaient sensibles qu'à certaines périodes de leur croissance ou dans certaines conditions, deviennent sensibles en de plus larges circonstances. Des plantes résistantes dans certaines circonstances se trouvent être moyennement sensibles grâce aux produits conformes à l'invention. Globalement, le taux d'efficacité herbicide total augmente sur un grand nombre de plantes et le taux d'échec diminue.

Le n-heptanoate de bromoxynil ou dibromo-3,5-n-heptanoyloxy-4-benzonitrile est un solide cireux de couleur crème et de point de fusion d'environ 45 ° C lorqu'il est pur et d'environ 39 ° C lorqu'il est de qualité technique. Il possède des propriétés herbicides similaires à celles du n-octanoate de bromoxynil.

Le n-heptanoate d'ioxynil ou diiodo-3,5-n-heptanoyloxy-4-benzonitrile est un solide cireux de couleur crème à maron et de pont de fusion d'environ 68 ° C. Ce produit n'a pas, jusqu'à présent, été largement utilisé comme herbicide.

Le n-butyrate de bromoxynil ou dibromo-3,5-n-butanoyloxy-4-benzonitrile est un solide cireux de couleur crème et de point de fusion d'environ 82°C. Du fait de sa relativement faible solubilité dans les solvants habituellement utilisés dans les formulations herbicides, il n'a jusqu'a présent pas été utilisé seul mais en association avec du n-octanoate de bromoxynil et éventuellement des esters d'acides phénoxy-alcanoïques. Dans ces conditions, des formulations contenant jusqu'à 480 g/litre de bromoxynil, ou bien 360 g/litre de bromoxynil et 360 g/litre de 2,4-MCPA sont réalisées industriellement.

Le n-butyrate d'ioxynil ou diiodo-3,5-n-butanoyloxy-4-benzonitrile est un solide cireux de couleur crème à marron et de point de fusion d'environ 118°C. Du fait, comme pour le bromoxynil, de sa relativement faible solubilité dans les solvants habituellement utilisés dans les formulations herbicides, il n'est pas recommandé de l'utiliser seul et on trouve des associations d'ioxynil sous forme de mélange d'esters n-butyrique et n-octanoïque. De telles associations ne sont toutefois pas utilisées en pratique.

Un mélange contenant deux moles de n-heptanoate de bromoxynil et une mole de n-butyrate de bromoxynil présente un point de fusion d'environ 26°C et un mélange contenant une mole de n-heptanoate de bromoxynil et une mole de n-butyrate de bromoxynil présente un point de fusion d'environ 40-50°C. Ces deux mélanges sont au moins aussi solubles que le n-octanoate de bromoxynil dans les solvants des formulations herbicides ; les associations avec des esters d'acides phénoxy-alcanoïques comme le mecoprop ou le 2,4-MCPA peuvent être réalisées comme avec le n-octanoate de bromoxynil.

De la même manière que pour le bromoxynil, un mélange contenant deux moles de n-heptanoate d'ioxynil et une mole de n-butyrate d'ioxynil présente un point de fusion d'environ 49°C et un mélange contenant une mole de n-heptanoate d'ioxynil et une mole de n-butyrate d'ioxynil présente un point de fusion d'environ 72°C. Ces deux mélanges sont sensiblement aussi solubles que le n-octanoate d'ioxynil dans les solvants des formulations herbicides ; des associations avec des esters d'acides phénoxy-alcanoïques comme le mecoprop ou le 2,4-MCPA peuvent être réalisées comme avec le n-octanoate d'ioxynil.

Le mélange dans un rapport molaire défini de n-heptanoate de bromoxynil et de n-butyrate de bromoxynil selon l'invention peut être préparé, conformément à l'invention, par réaction de bromoxynil avec un mélange en proportions convenables des dérivés réactifs des acides n-heptanoïque et n-butyrique, par exemple de leurs anhydrides ou le leurs chlorures d'acide, ou bien par mélange des quantités appropriées de n-heptanoate et de n-butyrate de bromoxynil, ou encore par mélange en quantités convenables d'un mélange déjà réalisé, dans un autre rapport molaire de n-heptanoate et de n-butyrate de bromoxynil, avec soit du n-heptanoate, soit du n-butyrate de bromoxynil.

Le mélange dans un rapport molaire défini de n-heptanoate d'ioxynil et de n-butyrate d'ioxynil selon l'invention peut être préparé suivant les trois procédés décrits ci-dessus pour le bromoxynil, après adaptation à l'ioxynil.

Dans les produits herbicides conformes à l'invention, en vise plus spécialement comme rapport molaire de n-heptanoate de bromoxynil (ou d'ioxynil) au n-butyrate de bromoxynil (ou d'ioxynil) les deux rapports suivants : 1,0 et 2,0.

Si l'on souhaite ne réaliser le mélange d'oxynil(s) avec le ou les acide(s) phénoxy-alcanoïque(s) qu'au moment de l'emploi, on peut établir des formulations concentrées ne contenant, comme matière active, que du bromoxynil et/ ou de l'ioxynil sous forme d'un mélange d'esters n-heptanoïque et n-butyrique. Ces formulations constituent alors des concentrés émulsionnables qui sont dispersés dans l'eau d'épandage simultanément avec les formulations des acides phénoxy-alcanoïques sous quelle que forme que ce soit (ester ou sel) et éventuellement également avec des formulations de toute autre matière active.

Pour concentrer au maximum les formulations contenant la partie oxynil, on adopte, comme rapport molaire d'esters n-heptanoïque sur n-butyrique celui assurant un point de cristallisation de formulation le plus bas possible, à savoir 2.0.

Lorsque la formule concentrée contient, en plus de la partie oxynil(s), la partie ester d'acide phénoxyalcanoïque, celle-ci est toujours présente en grandes proportions et, par conséquent, on ne pourra augmenter de manière significative la teneur totale en matière bioactives herbicides. Dans ce cas, on utilise plus volontiers un rapport molaire d'esters n-heptanoïque sur n-butyrique voisin de 1.0 qui assure dans la formulation une plus grande quantité d'équivalent oxynil, à quantité d'esters constante (du fait que la proportion d'oxynil est plus importante dans le butyrate que dans l'heptanoate) tout en procurant un comportement au froid identique à la formulation réalisée sur base d'ester n-octanoïque.

Les produits herbicides liquides, conformes à l'invention et qui sont dispersables dans l'eau pour donner des fluides de pulvérisation convenables pour l'application sur les plantes comprennent, outre les mélanges d'esters de bromoxynil et/ou d'ioxynil et les esters d'acides phénoxy-alcanoïques précédemment définis, un ou plusieurs solvants et des agents émulsifiants convenables, ioniques ou non ioniques.

Comme solvants, on peut utiliser des hydrocarbures de pétrole, notamment les constituants aromatiques et paraffiniques. On peut également utiliser d'autres solvants tels que les huiles animales, végétales et synthétiques.

De préférence, on utilise des huiles minérales à haute teneur en produits aromatiques et plus particulièrement celles ayant une teneur pondérale en produits aromatiques d'au moins 70 % et un point éclair supérieur à 50°C.

Un solvant préféré pour une formulation sans ester d'acide phénoxy-alcanoïque est celui à 99 % de produits aromatiques commercialisé sous la marque "SOLVESSO 200" par ESSO. Dans le cas des formulations contenant un ester d'acide phénoxy-alcanoïque, on peut également utiliser le solvant commercialisé sous la marque "SHELL SOL R" par SHELL et qui ne contient que 74 % de produits aromatiques. On peut également utiliser des alcools ayant une chaine hydrocarbonée linéaire, ramifiée ou cyclique, composée d'au moins 6 atomes de carbone, des polyols comme par exemple l'éthylèneglycol, le butyglycol ou des produits de la séries des DOWANOL commercialisés par la Société DOW.

Comme agents émulsifiants, on peut utiliser des sulforicinoléates, des dérivés d'ammonium quaternaire, des produits à base de condensats d'oxyde d'éthylène avec de l'oxyde de propylène ou avec des alklylphénols, par exemple nonyl ou ocytl ou polyarylphénols, ou avec des huiles végétales saponifiées ou non, ou encore avec des alcools droits ou ramifiés, par exemple l'alcool laurique. On peut également utiliser des esters carboxyliques d'anhydrosorbitols éventuellement polyéthoxylés, des sels alcalins, alcalino-terreux ou d'ammonium d'esters sulfuriques, des dérivées sulfoniques à haut poids moléculaire, tels les lignosulfonates ou les alkylbenzène-sulfonates de sodium et de calcium. On peut enfin utiliser des sels alcalins, alcalin-terreux, d'ammonium ou d'amines d'acides carboxyliques.

Ces agents émulsifiants sont utilisés de préférence à raison de 0,1 à 20 % en poids/poids, soit dans des hydrocarbures comme par exemple une huile minérale ayant un point éclair supérieur à 50°C et une teneur pondérale en produits aromatiques d'au moins 70%, soit dans des alcools courts comme le méthanol, l'isopropanol ou l'isobutanol.

Les produits herbicides conformes à l'invention contiennent de 100 à 600 g/l d'équivalent ioxynil et/ou bromoxynil sous formé d'un mélange d'esters n-heptanoïque et n-butyrique. Ils sont destinés à être utilisés conjointement à des formulations concentrées d'acides phénoxy-alcanoïques.

Ces produits herbicides conformes à l'invention peuvent, par ailleurs, ne contenir que de 50 à 400 grammes par litre d'équivalent ioxynil et/ou bromoxynil, sous forme d'un mélange d'esters n-heptanoïque et n-butyrique, mais ils contiennent alors également entre 100 et 650 grammes par litre d'un ou plusieurs acides phénoxy-alcanoïque, sous forme d'ester et notamment de butyglycol ou d'iso-octanol, ou sous forme de sel.

Les produits conformes à l'invention peuvent contenir également d'autres herbicides ayant une bonne solubilité dans les solvants cités, comme par exemple la famille des biphényl-éther dont le bifenox [c'est-à-dire (dichloro-2,4-phénoxy)-5-nitro-2-benzoate de méthyle], les dérivés de l'acide benzoïque dont le dicamba (acide dichloro-3,6-méthoxy-2-benzoïque), les dérivés de l'acide picolinique dont l'acide dichloro-3,6-picolinique, les dérivés de triazines dont la cyanazine [(chloro-4-éthylamino-6-triazin-1,3,5-yl-2-amino)-2-méthyl-2-propionitrile].

Ces autres herbicides sont présents dans les produits herbicides liquides conformes à l'invention en une quantité qui dépend de leur efficacité herbicide.

Les fluides de pulvérisation pour la destruction des adventices, obtenus par dispersion dans l'eau des produits herbicides liquides conformes à l'invention, ainsi qu'un procédé de destruction de ces adventices à l'aide de ces fluides de pulvérisation sont également visés par l'invention.

Les fluides de pulvérisation contiennent de 0,05 à 5 % en poids/volume d'un mélange d'esters n-heptanoïque et n-butyrique de bromoxynil et/ou d'ioxynil et de 0,1 à 10 % en poids/volume d'ester d'acides phénoxy-alcanoïques ; ils sont utilisés à des doses d'application herbicide de 50 g à 1 kg par hectare d'équivalent bromoxynil et/ou ioxynil et de 100 g à 3 kg par hectare d'équivalent acide phénoxy-alcanoïque, ceci suivant la culture et les associations complémentaires envisagées.

L'invention sera encore mieux comprise à l'aide des exemples qui suivent et qui, sans être limitatifs, sont relatifs d'une part à des modes de réalisation avantageux de l'invention et d'autre part à des essais comparatifs mettant en évidence l'activité des produits herbicides selon l'invention.

EXEMPLE 1

Cet exemple concerne des produits herbicides conformes à l'invention sans acide phénoxy-alcanoïque.

On prépare des solutions solvantées utilisables comme concentrés émulsionnables et contenant 480 g/l d'équivalent oxynil en dissolvant différents esters de bromoxynil et/ou d'ioxynil, précisés ci-dessous, dans

4

une huile minérale essentiellement aromatique (Solvesso 200). Les proportions des différents esters dans chaque solution sont établies en pourcentages molaires.

Ces solutions sont agitées jusqu'à homogénéité et apparence liquide limpide. On ajoute alors sous agitation un mélange d'agents émulsifiants anioniques et non ioniques dont certains sont commercialisés par la Société Demanderesse sous la marque GALORYL, d'autres étant des huiles de ricin polyéthoxylées. On obtient ainsi des concentrés émulsionnables conduisant, par dispersion à 1 % dans l'eau, à des émulsions stables pendant au moins 2 heures.

Dans le tableau I, on a réuni les constituants, de trois concentrés émulsionnables, désignés par a, b et c, ainsi établis.

## TABLEAU I

| Constituants des concentrés émulsionnables | Proportions | | |
|---|---|---|---|
| | a | b | c |
| **Proportions molaires en esters d'oxynil** | | | |
| n-heptanoate de bromoxynil | 50 | | 28 |
| n-heptanoate d'ioxynil | | 67 | 33 |
| n-butyrate de bromoxynil | 50 | | 22 |
| n-butyrate d'ioxynil | | 33 | 17 |
| **Teneur en équivalent oxynils (g/l)** | | | |
| Bromoxynil | 480 | | 240 |
| Ioxynil | | 480 | 240 |
| **Proportions d'agents émulsifiants dans le concentré émulsionnable (% p/p)** | | | |
| Galoryl EM 514 | 3,5 | | |
| Galoryl EM 4039 | | 5,5 | 5,0 |
| Condensat de 10 moles OE sur huile de ricin | · | 1,5 | |
| Condensat de 20 moles OE sur huile de ricin (OE = oxyde d'éthylène) | 6,5 | 3,0 | 5,0 |
| **Solvant : SOLVESSO 200** | qsp 100 % (p/p) | | |

Les trois concentrés émulsionnables ainsi préparés, dont les densités à 20° C sont respectivement de 1,242 (a), 1,283 (b) et 1,265 (c), sont homogènes et liquides. Ils sont stables physiquement et chimiquement à la température ordinaire, au stockage de vieillissement accéléré pendant 14 jours à 54° C, et à la température de -5° C.

EXEMPLE 2

Cet exemple concerne des produits herbicides conformes à l'invention comportant un acide phénoxy-alcanoïque.

On prépare deux solutions solvantées utilisables comme concentrés émulsionnables et contenant 160 g/l d'équivalent oxynil en dissolvant différents esters de bromoxynil ou d'ioxynil, précisés ci-dessous, dans une huile minérale essentiellement minérale (Solvesso 200). Les proportions des esters dans chaque solution sont établies en pourcentages molaires. On ajoute à ces solutions un ester d'acide phénoxy-alcanoïque liquide en une quantité correspondant à 480 g/l d'équivalent acide.

Les solutions ainsi obentues sont agitées jusqu'à homogénéité et apparence liquide limpide. On ajoute alors sous agitation un mélange d'agents émulsifiants anioniques et non ioniques, comme dans l'exemple 1. Les concentrés émulsionnables ainsi obtenus fournissent, lorsqu'ils sont dispersés à 1 % dans l'eau, des émulsions stables pendant au moins 2 heures.

Dans le tableau II, on a indiqué les constituants de ces deux concentrés émulsionnables désignés respectivement par d et e. Dans le but de pouvoir établir des comparaisons, on a également indiqué dans le tableau II les constituants de trois concentrés émulsionnables selon l'art antérieur, désignés respectivement par f, g et h, dont les teneurs en matières actives ne sont pas toujours identiques.

Le tableau II comprend enfin l'indication des proportions d'agents émulsifiants et de solvant.

## TABLEAU II

| Constituants des concentrés émulsionnables | Proportions | | | | |
|---|---|---|---|---|---|
| | d | e | f | g | h |
| **Proportions molaires en esters d'oxynil** | | | | | |
| n-heptanoate de bromoxynil | | 50 | | | |
| n-heptanoate d'ioxynil | 50 | | | | |
| n-butyrate de bromoxynil | | 50 | | | 50 |
| n-butyrate d'ioxynil | 50 | | | | |
| n-octanoate de bromoxynil | | | | 100 | 50 |
| n-octanoate d'ioxynil | | | 100 | | |
| **Teneur en équivalent oxynils (g/l)** | | | | | |
| Bromoxynil | | 360 | | 200 | 360 |
| Ioxynil | 160 | | 120 | | |
| **Teneur en équivalent acide phénoxy-alcanoïque (g/l)** | | | | | |
| sous forme d'ester de butylglycol de | | | | | |
| Mecoprop | 480 | | 360 | | |
| MCPA | | 360 | | 200 | 360 |
| **Proportions d'agents émulsifiants dans le concentré émulsionnable (% p/p)** | | | | | |
| Galoryl EM 514 | | | | | 2,7 |
| Galoryl EM 4036 | | | 6 | | |
| Galoryl EM 4039 | 6,5 | 5,0 | | 5,8 | |
| Condensat de 10 moles OE / huile de ricin | 1,15 | 2,0 | | | 9,3 |
| Condensat de 20 moles OE / huile de ricin | 2,35 | 3,0 | 2 | 4,7 | |
| (OE = oxyde d'éthylène) | | | | | |
| **Solvant (p/p) :** SOLVESSO 200 | qsp 100% | | | | qsp 100% |
| SHELL SOL R | | | qsp 100% | | |

La densité de ces cinq produits est :
produit d : 1,168
produit e : 1,175
produit f : 1,091
produit g : 1,090
produit h : 1,178.

Les cinq concentrés émulsionnables ainsi préparés sont homogènes et liquides. Ils sont stables physiquement et chimiquement à la température ordinaire, au stockage de vieillissement accéléré pendant 14 jours à 54°C et au stockage à -5°C.

## EXEMPLE 3

Cet exemple est relatif à des essais comparatifs, en champs, entre produits conformes à l'invention et produits de l'art antérieur.

6

Dans un essai mené dans 7 champs différents, dispersés de façon à obtenir des conditions de végétation et donc de réaction des plantes différentes, on a comparé :

- un produit herbicide selon l'art antérieur (produit f, tableau II) à base de n-octanoate d'ioxynil et de mecoprop, ce produit titrant 120 g/l d'ioxynil et 360 g/l de mecoprop,

- un produit herbicide conforme à l'invention à base de n-heptanoate et de n-butyrate d'ioxynil, ce produit titrant 160 g/l d'ioxynil et 480 g/l de mecoprop (produit d du tableau II).

Ces produits ont été essayés sur céréales d'hiver divisées en parcelles d'environ 15 à 22 m². Les traitements ont été dupliqués et on a prévu des parcelles de contrôle, non traitées, toutes les deux parcelles. Les herbicides ont été appliqués entre le début du tallage et le plein tallage des céréales, en émulsion dans l'eau à la dose de 500 litres de liquide dilué par hectare.

Les deux produits ont été appliqués à deux doses, à savoir :

- 300 g/ha d'ioxynil plus 900 g/ha de mecoprop, soit 2,500 l/ha du produit f, tableau II ou 1,870 l/ha du produit d, tableau II,

- 360 g/ha d'ioxynil plus 1080 g/ha de mecoprop, soit 3,000 l/ha du produit f, tableau II ou 2,250 l/ha du produit d, tableau II.

Les parcelles ont été observées environ 45 jours après traitement et le pourcentage de destruction de la flore adventice présente sur chaque champ a été mesuré.

Dans la mesure où mêmes mauvaises herbes se trouvaient à un stade végétatif différent d'un champ à l'autre, les rendant ainsi plus ou moins résistantes aux herbicides, on n'a pas cherché à réaliser une moyenne d'efficacité globale, ni même par champ ou par plante qui n'aurait pas fait ressortir les points forts et faibles de chaque produit ; par contre, on a reporté par plante, puis globalement, d'une part le pourcentage d'observations correspondant à des cas où les mauvaises herbes étaient quasiment détruites (efficacité d'au moins 95 %) et, d'autre part, le pourcentage d'observation correspondant à des cas où elles étaient insuffisamment ou pas du tout maitrisées (efficacité inférieure à 70 %).

Une telle méthode permet facilement de repérer sur un graphique du spectre testé, la sensibilité respective des plantes dans des conditions diverses d'utilisation, à savoir conditions géographiques, climatiques et stades végétatifs différents des diverses mauvaises herbes adventices. Par superposition des graphiques, on peut comparer divers produits.

Dans le tableau III, on a noté tous les résultats d'efficacité à 45 jours, par plante, champ, parcelle, et dose de produit. Puis, dans le tableau IV, on a confondu les deux doses de chaque produit, ce qui est possible vu leur proximité, afin d'établir par plante les pourcentages d'observations de satisfaction et d'insatisfaction pour chaque produit, sur un nombre d'observations suffisant.

Les pourcentages globaux des cas des résultats satisfaisants et non satisfaisants sont indiqués ainsi que les écarts sur ces moyennes qui donnent en fait un aperçu sur la régularité d'action des produits, sur le spectre des plantes testées.

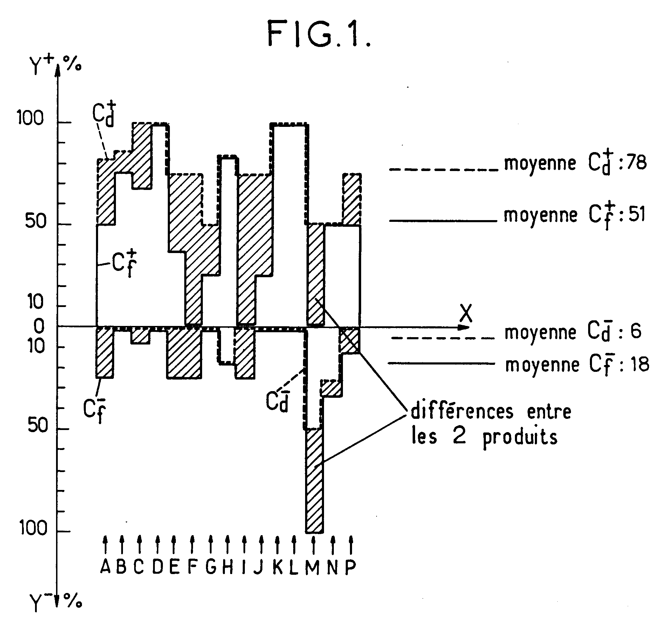

On montre, sur le graphique de la figure 1, le spectre comparé des taux de satisfaction et d'insatisfaction des produits.

Sur ce graphique figurent, tant pour le produit selon l'art antérieur (f, tableaux III et IV) que pour le produit conforme à l'invention (d, tableaux III et IV), en ordonnée positive $Y^+$ et négative $Y^-$, respectivement le pourcentage des résultats satisfaisants (efficacité herbicide ≥ 95 %) et le pourcentage des résultats non satisfaisants (efficacité herbicide < 70 %) qui correspondent successivement à chacune des plantes testées portées en A à P sur l'abscisse X, à savoir :

A = Aphanes arvensis

B = Cardamine hirsuta

C = Cerastium glomeratum

D = Galium aparine

E = Lamium purpureum

F = Legousia speculum-veneris

G = Matricaria chamomilla

H = Matricaria inodora

I = Papaver rhoeas

J = Polygonum convolvulus

K = Ranunculus sardous

L = Raphanus raphtanistrum

M = Rumex acetosa

N = Veronica hederifolia

P = Veronica persica.

L'ensemble des résultats satisfaisants formant des courbes $C_f^+$ et $C_d^+$ pour les pourcentages positifs relatifs aux produits f et d, l'ensemble des résultats non satisfaisants formant des courbes $C_f^-$ et $C_d^-$ pour les pourcentages négatifs relatifs aux produits f et d.

Sur ce graphique figurent également les moyennes relatives aux courbes $C_f^+$, $C_d^+$ et $C_f^-$, $C_d^-$.

<div align="center">

**TABLEAU III**

</div>

| | | Produits testés | | | |
|---|---|---|---|---|---|
| | | (f)<br>n-octanoate<br>d'ioxynil<br>+ mecoprop,<br>ester de<br>butylglycol | | (d)<br>n-heptanoate/<br>n-butyrate<br>d'ioxynil<br>+ mecoprop,<br>ester de<br>butylglycol | |
| Dose ioxynil+mecoprop (g/ha) | | 300+900 | 360+1080 | 300+900 | 360+1080 |
| PLANTE | Champ | Résultats obtenus | | | |
| Aphanes arvensis | champ 2 | 100/100 | 100/100 | 100/100 | 100/100 |
| | champ 5 | 30/30 | 100/100 | 100/100 | 100/100 |
| | champ 6 | 70/30 | 70/70 | 95/70 | 95/70 |
| Cardamine hirsuta | champ 5 | 100/100 | 100/100 | 100/95 | 100/100 |
| | champ 7 | 95/70 | 95/70 | 95/70 | 100/95 |
| Cerastium glomeratum | champ 4 | 70/70 | 95/95 | 100/95 | 100/95 |
| | champ 5 | 100/100 | 100/100 | 100/100 | 100/100 |
| | champ 7 | 70/30 | 95/95 | 95/95 | 100/100 |
| Galium aparine | champ 3 | 100/95 | 100/95 | 100/95 | 100/95 |
| Lamium purpureum | champ 5 | 100/95 | 100/70 | 100/100 | 100/100 |
| | champ 7 | 70/30 | 70/30 | 95/70 | 95/70 |
| Legousia speculum-<br>veneris | champ 6 | 70/30 | 70/70 | 95/95 | 95/70 |
| Matricaria<br>chamomilla | champ 6 | 70/70 | 95/70 | 95/70 | 95/70 |
| Matricaria inodora | champ 1 | 30/30 | 100/100 | 30/30 | 100/100 |
| | champ 4 | 100/100 | 100/100 | 100/100 | 100/100 |
| | champ 5 | 100/100 | 100/100 | 100/100 | 100/100 |
| Papaver rhoeas | champ 4 | 70/30 | 70/70 | 95/70 | 95/95 |
| | champ 6 | 70/30 | 70/70 | 95/70 | 95/95 |
| Polygonum convol-<br>vulus | champ 4 | 95/70 | 70/70 | 100/95 | 100/70 |

## TABLEAU III (suite)

| | | Produits testés | | | |
|---|---|---|---|---|---|
| | | (f) n-octanoate d'ioxynil + mecoprop, ester de butylglycol | | (dl) n-heptanoate/ n-butyrate d'ioxynil + mecoprop, ester de butylglycol | |
| Dose ioxynil+mecoprop (g/ha) | | 300+900 | 360+1080 | 300+900 | 360+1080 |
| PLANTE | Champ | Résultats obtenus | | | |
| Ranunculus sardous | champ 7 | 100/95 | 100/95 | 95/95 | 100/95 |
| Raphanus raphanis- trum | champ 5 | 100/100 | 100/100 | 100/100 | 100/100 |
| Rumex acetosa | champ 5 | 5/5 | 5/5 | 100/100 | 30/5 |
| Veronica hederifolia | champ 2 champ 4 champ 5 | 100/100 5/5 95/70 | 95/70 30/5 100/95 | 100/70 70/5 95/95 | 95/70 30/5 100/95 |
| Veronica persica | champ 6 champ 7 | 70/30 95/95 | 70/70 100/95 | 95/70 95/95 | 95/70 100/100 |

TABLEAU IV

| PLANTE | Nombre d'observations | Produits testés | | | |
|---|---|---|---|---|---|
| | | (f) n-octanoate d'ioxynil + mecoprop, ester de butylglycol | | (d) n-heptanoate/ n-butyrate d'ioxynil + mecoprop, ester de butylglycol | |
| | | % de résultats | | % de résultats | |
| | | satisfaisants | non satisfaisants | satisfaisants | non satisfaisants |
| Aphanes arvensis | 12 | 50 | 25 | 83 | 0 |
| Cardamine hirsuta | 8 | 75 | 0 | 87 | 0 |
| Cerastium glomeratum | 12 | 67 | 8 | 100 | 0 |
| Galium aparine | 4 | 100 | 0 | 100 | 0 |
| Lamium purpureum | 8 | 37 | 25 | 75 | 0 |
| Legousia speculumveneris | 4 | 0 | 25 | 75 | 0 |
| Matricaria chamomilla | 4 | 25 | 0 | 50 | 0 |
| Matricaria inodora | 12 | 83 | 17 | 83 | 17 |
| Papaver rhoeas | 8 | 0 | 25 | 75 | 0 |
| Polygonum convolvulus | 4 | 25 | 0 | 75 | 0 |
| Ranunculus sardous | 4 | 100 | 0 | 100 | 0 |
| Raphanus raphanistrum | 4 | 100 | 0 | 100 | 0 |
| Rumex acetosa | 4 | 0 | 100 | 50 | 50 |
| Veronica hederifolia | 12 | 50 | 33 | 50 | 25 |
| Veronica persica | 8 | 50 | 12 | 75 | 0 |
| Moyenne générale | 108 | 51 | 18 | 78 | 6 |
| écart par rapport à la moyenne | 108 | 36 | 26 | 18 | 14 |

Il résulte du tableau IV que, par plante, la formulation conforme à l'invention apporte une amélioration sur le plan du pourcentage de cas de réussite herbicide (sur Lamium purpureum, Legousia speculum-veneris, Raphanus raphanistrum, Polygonum convolvulus et Rumex acetosa), sur celui du pourcentage de cas d'échec (sur Aphanes arvensis, Lamium purpureum, Legousia speculum-veneris, Raphanus raphanistrum et Rumex acetosa). Dans le cas des quatre dernières plantes citées, l'amélioration porte sur les deux plans.

Les moyennes sur toutes plantes répertoriées sont aussi en faveur de la formulation conforme à l'invention et dans la figure 1, les zones hachurées traduisant l'amélioration de la formulation conforme à l'invention par rapport à la formulation antérieurement connue d'une manière très explicite. Il est à noter que, sur aucune plante, la formulation conforme à l'invention n'a été trouvée inférieure à la formulation de comparaison et que les plantes pour lesquelles les pourcentages de satisfaction ou d'insatisfaction se rejoignent pour les deux produits correspondent en fait aux cas de satisfaction totale de la formule de comparaison.

Il est également à noter que, pour aucun produit, à aucune des doses testées, les céréales d'hiver n'ont été affectées.

EXEMPLE 4

Dans des essais comparatifs menés sur 5 champs différents dispersés, on a comparé les deux concentrés émulsionnables de l'exemple 3 sur des céréales d'hiver à un stade différent de croissance : en période de fin tallage à début montaison.

Les doses d'utilisation par hectare, la méthodologie d'essai et d'exploitation des résultats sont les mêmes que dans l'exemple 3.

Dans le tableau V, on a noté tous les résultats d'efficacité à 45 jours par plante, champ, parcelle et dose de produit, et dans le tableau VI, on a confondu les deux doses de chaque produit afin d'établir, par plante, les pourcentages d'observation de satisfaction (efficacité herbicide supérieure ou égale à 95 %) et d'insatisfaction (efficacité herbicide inférieure à 70 %) pour chaque produit, sur un nombre d'observations suffisant. Les pourcentages globaux des cas de satisfaction et d'insatisfaction ainsi que les écarts types sur ces moyennes sont donnés.

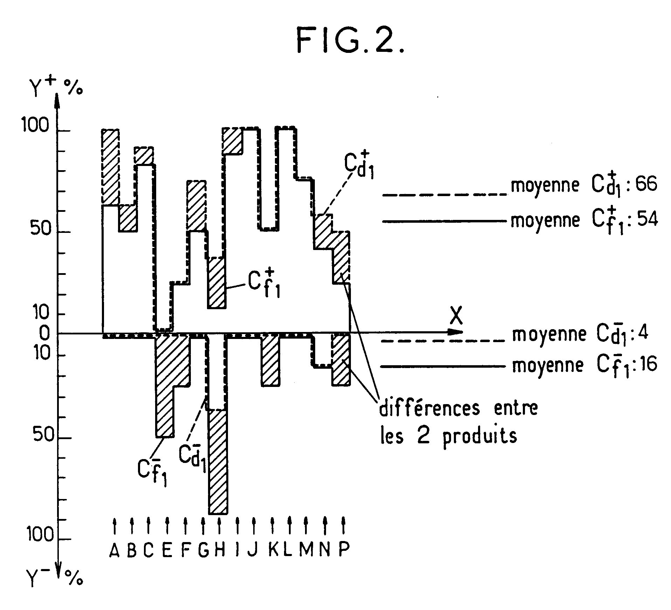

On a montré sur le graphique de la figure 2, le spectre comparé des taux de satisfaction et d'insatisfaction des produits testés.

Les précisions fournies en rapport avec la figure 1 s'appliquent de la même manière à la figure 2, les plantes testées étant :

A = Aphanes arvensis
B = Cardamine hirsuta
C = Cerastium glomeratum
E = Lamium purpureum
F = Legousia speculum-veneris
G = Matricaria chamomilla
H = Matricaria inodora
I = Papaver rhoeas
J = Polygonum convolvulus
K = Ranunculus sardous
L = Raphanus raphanistrum
M = Rumex acetosa
N = Veronica hederifolia
P = Veronica persica.

On y retrouve également des courbes $C_{f1}^+$, $C_{d1}^+$ et $C_{f1}^-$, $C_{d1}^-$ correspondant aux courbes $C_f^+$, $C_d^+$, $C_f^-$, $C_d^-$ de la figure 1.

On retrouve enfin les moyennes relatives aux courbes $C_{f1}^+$, $C_{d1}^+$, $C_{f1}^-$, $C_{d1}^-$.

TABLEAU V

| | | Produits testés | | | |
|---|---|---|---|---|---|
| | | (f)<br>n-octanoate<br>d'ioxynil<br>+ mecoprop,<br>ester de<br>butylglycol | | (d)<br>n-heptanoate/<br>n-butyrate<br>d'ioxynil<br>+ mecoprop,<br>ester de<br>butylglycol | |
| Dose ioxynil+mecoprop (g/ha) | | 300+900 | 360+1080 | 300+900 | 360+1080 |
| PLANTE | Champ | Résultats obtenus | | | |
| Aphanes arvensis | champ 1<br>champ 4 | 100/100<br>70/70 | 100/100<br>95/70 | 100/100<br>95/95 | 100/100<br>95/95 |
| Cardamine hirsuta | champ 3<br>champ 5 | 95/70<br>95/70 | 95/70<br>95/70 | 95/95<br>95/70 | 95/70<br>95/70 |
| Cerastium glomeratum | champ 2<br>champ 3<br>champ 5 | 100/100<br>100/95<br>95/70 | 100/100<br>95/95<br>95/70 | 100/100<br>100/95<br>95/70 | 100/95<br>100/95<br>95/95 |
| Lamium purpureum | champ 5 | 70/30 | 70/30 | 70/70 | 70/70 |
| Legousia speculum-<br>veneris | champ 4 | 70/70 | 95/30 | 70/70 | 95/70 |
| Matricaria<br>chamomilla | champ 4 | 95/70 | 95/70 | 100/95 | 95/70 |
| Matricaria inodora | champ 2<br>champ 3 | 5/5<br>30/30 | 30/5<br>95/5 | 5/5<br>70/30 | 100/100<br>95/70 |
| Papaver rhoeas | champ 2<br>champ 4 | 100/100<br>100/95 | 100/100<br>100/70 | 100/100<br>100/100 | 100/100<br>100/100 |
| Polygonum convol-<br>vulus | champ 2 | 100/100 | 100/100 | 95/95 | 95/95 |

12

TABLEAU V (suite)

| | | Produits testés | | | |
|---|---|---|---|---|---|
| | | (f) n-octanoate d'ioxynil + mecoprop, ester de butylglycol | | (d) n-heptanoate/ n-butyrate d'ioxynil + mecoprop, ester de butylglycol | |
| Dose ioxynil+mecoprop (g/ha) | | 300+900 | 360+1080 | 300+900 | 360+1080 |
| PLANTE | Champ | Résultats obtenus | | | |
| Ranunculus sardous | champ 5 | 95/30 | 95/70 | 95/70 | 95/70 |
| Raphanus raphanistrum | champ 3 | 100/100 | 95/95 | 100/100 | 95/95 |
| Rumex acetosa | champ 2 | 100/70 | 100/70 | 100/70 | 100/95 |
| | champ 3 | 100/100 | 100/100 | 100/100 | 95/70 |
| Veronica hederifolia | champ 1 | 100/70 | 70/70 | 70/70 | 95/70 |
| | champ 2 | 70/30 | 70/30 | 95/30 | 100/30 |
| | champ 3 | 100/95 | 100/95 | 100/100 | 100/100 |
| Veronica persica | champ 4 | 70/30 | 70/30 | 70/70 | 95/70 |
| | champ 5 | 95/70 | 95/70 | 95/70 | 95/95 |

13

TABLEAU VI

| PLANTE | Nombre d'observations | Produits testés | | | |
|---|---|---|---|---|---|
| | | (f) n-octanoate d'ioxynil + mecoprop, ester de butylglycol | | (d) n-heptanoate/ n-butyrate d'ioxynil + mecoprop, ester de butylglycol | |
| | | % de résultats | | % de résultats | |
| | | satisfaisants | non satisfaisants | satisfaisants | non satisfaisants |
| Aphanes arvensis | 8 | 62 | 0 | 100 | 0 |
| Cardamine hirsuta | 8 | 50 | 0 | 62 | 0 |
| Cerastium glomeratum | 12 | 83 | 0 | 92 | 0 |
| Lamium purpureum | 4 | 0 | 50 | 0 | 0 |
| Legousia speculumveneris | 4 | 25 | 25 | 25 | 0 |
| Matricaria chamomilla | 4 | 50 | 0 | 75 | 0 |
| Matricaria inodora | 8 | 12 | 88 | 37 | 37 |
| Papaver rhoeas | 8 | 88 | 0 | 100 | 0 |
| Polygonum convolvulus | 4 | 100 | 0 | 100 | 0 |
| Ranunculus sardous | 4 | 50 | 25 | 50 | 0 |
| Raphanus raphanistrum | 4 | 100 | 0 | 100 | 0 |
| Rumex acetosa | 8 | 75 | 0 | 75 | 0 |
| Veronica hederifolia | 12 | 42 | 17 | 58 | 17 |
| Veronica persica | 8 | 25 | 25 | 50 | 0 |
| Moyenne générale écart par rapport à la moyenne | 96 96 | 54 32 | 16 26 | 66 32 | 4 10 |

EP 0 228 943 B1

Comme dans l'exemple 3, et ceci au vu du tableau VI, la formulation conforme à l'invention apporte une amélioration sur le plan du pourcentage de cas de résultats herbicides satisfaisants (sur Aphanes arvensis), Matricaria chamomilla et inodora et sur Veronica persica), sur celui du pourcentage de cas de résultats insatisfaisants (sur Lamium purpureum, Legousia speculum-veneris, Matricaria inodora, Ranunculus sardous et Veronica persica). Dans le cas de Matricaria inodora et Veronica persica, l'amélioration porte sur les deux plans.

Les moyennes sur toutes plantes testées sont aussi en faveur de la formulation conforme à l'invention et dans la figure 2, les zones hachurées figurent l'amélioration apportée par l'invention d'une manière très explicite. Comme dans l'exemple 3, sur aucune plante, la formulation conforme à l'invention n'est inférieure à la formulation antérieurement connue.

Il est également à noter que, pour aucun produit, à aucune des doses testées, les céréales d'hiver n'ont été affectées.

## Revendications

1. Produits herbicides à efficacité améliorée à base d'ester d'oxynil caractérisés par le fait qu'ils comprennent un mélange d'esters n-heptanoïque et n-butyrique de bromoxynil et/ou d'ioxynil associé à un ou plusieurs acides phénoxy-alcanoïques notamment sous forme d'ester ou de sel, le n-heptanoate de bromoxynil (ou d'ioxynil) et le n-butyrate de bromoxynil (ou d'ioxynil) se trouvant dans un rapport molaire de n-heptanoate de bromoxynil (ou d'ioxynil) au n-butyrate de bromoxynil (ou d'ioxynil) compris entre 0,25 et 10, de préférence entre O,65 et 4.

2. Produits herbicides selon la revendication 1, caractérisés par le fait que le rapport molaire des esters n-heptanoïque aux esters n-butyrique est de 1.

3. Produits herbicides selon la revendication 1, caractérisés par le fait que le rapport molaire des esters n-heptanoïque aux esters n-butyrique est de 2.

4. Produits herbicides selon l'une des revendications 1 à 3, caractérisés par le fait que l'acide phénoxyalcanoïque est constitué par le mecoprop, le 2,4-MCPA, le 2,4-D ou le 2,4-DP.

5. Produits herbicides selon la revendication 4, caractérisés par le fait que l'acide phénoxy-alcanoïque est mis en oeuvre sous la forme d'ester de butylglycol ou d'iso-octanol.

6. Procédé de préparation du mélange d'esters n-heptanoïque et n-butyrique de bromoxynil ou d'ioxynil entrant dans la constitution des produits herbicides selon l'une des revendications 1 à 5, caractérisé par le fait que l'on fait réagir le bromoxynil ou l'ioxynil avec un mélange en proportions convenables des dérivés réactifs des acides n-heptanoïque et n-butyrique.

7. Procédé selon la revendication 6, caractérisé par le fait que les dérivés réactifs des acides n-heptanoïque et n-butyrique mis en oeuvre sont constitués par les anhydrides ou les chlorures d'acides de ces acides.

8. Procédé selon la revendication 6, caractérisé par le fait que l'on mélange des quantités appropriées de n-heptanoate et de n-butyrate de bromoxynil et/ou d'ioxynil.

9. Procédé selon la revendication 6, caractérisé par le fait que l'on mélange des quantités convenables d'un mélange déjà réalisé dans un autre rapport molaire de n-heptanoate et de n-butyrate avec soit du n-heptanoate, soit du n-butyrate.

10. Produits herbicides selon l'une des revendications 1 à 5, caractérisés par le fait qu'ils contiennent de 100 à 600 g/l d'équivalent d'ioxynil et/ou de bromoxynil.

11. Produits herbicides selon l'une des revendications 1 à 5, caractérisés par le fait qu'ils contiennent de 50 à 400 g/l d'équivalent d'ioxynil et/ou de bromoxynil et de 100 à 650 g/l d'un ou plusieurs acides phénoxyalcanoïque sous forme d'esters et notamment de butylglycol ou d'iso-octanol.

**12.** Produits herbicides selon l'une des revendications 1 à 5, 10 et 11, caractérisés par le fait qu'ils comprennent un ou plusieurs solvants et des agents émulsifiants ioniques ou non ioniques.

**13.** Produits herbicides selon la revendication 12, caractérisés par le fait qu'ils comprennent, à titre de solvants, des hydrocarbures de pétrole, notamment les constituants aromatiques et paraffiniques, ou des huiles animales, végétales et synthétiques.

**14.** Produits herbicides selon la revendication 13, caractérisés par le fait que le solvant utilisé est constitué par une huile minérale ayant une teneur pondérale en produits aromatiques d'au moins 70 % et un point éclair supérieur à 50°C.

**15.** Produits herbicides selon la revendication 12, caractérisés par le fait qu'ils contiennent, à titre d'agents émulsifiants, des sulforicinoléates, des dérivés d'ammonium quaternaire, des produits à base de condensats d'oxyde d'éthylène avec de l'oxyde de propylène ou avec des alkylphénols, des esters carboxyliques d'anhydrosorbitols éventuellement polyéthoxylés, des sels alcalins, alcalino-terreux ou d'ammonium d'esters sulfuriques, des dérivés sulfoniques à haut poids moléculaire choisis parmi les lignosulfonates et les alkylbenzène-sulfonates de sodium et de calcium.

**16.** Produits herbicides selon la revendication 15, caractérisés par le fait que les agents émulsifiants sont utilisés à raison de 0,1 à 20 % en poids/poids dans des hydrocarbures ou dans des alcools courts.

**17.** Produits herbicides selon l'une des revendications 1 à 5 et 10 à 16, caractérisés par le fait qu'ils contiennent un autre herbicide.

**18.** Produits herbicides selon la revendication 17, caractérisés par le fait que d'autres herbicides sont sélectionnés dans la famille des biphényl-éther, des dérivés de l'acide benzoïque, des dérivés de l'acide picolinique et des dérivés de triazines.

**19.** Fluides de pulvérisation pour la destruction des adventices, caractérisés par le fait qu'ils sont obtenus par dispersion dans l'eau des produits herbicides selon l'une des revendications 1 à 5 et 10 à 18, lesdits fluides de puvérisation contenant de 0,05 à 5 % en poids/volume d'un mélange d'esters n-heptanoïque et n-butyrique de bromoxynil et/ou d'ioxynil et de 0,1 à 10 % en poids/volume d'esters d'acides phénoxy-alcanoïques.

**20.** Procédé de destruction des plantes adventices, caractérisé par le fait que l'on met en oeuvre un produit herbicide selon l'une des revendications 1 à 5 et 10 à 19 à une dose de 50 g à 1 kg/ha d'équivalent bromoxynil et/ou ioxynil.

**Claims**

**1.** Herbicidal products with improved efficiency on the basis of oxynil ester, characterized by the fact that they comprise a mixture of n-heptanoic and n-butyric bromoxynil and/or ioxynil esters associated with one or several phenoxy-alkanoic acids especially in ester or salt form, the bromoxynil (or ioxynil) n-heptanoate and the bromoxynil (or ioxynil) n-butyrate being in a molar ratio of bromoxynil (or ioxynil) n-heptanoate to bromoxynil (or ioxynil) n-butyrate comprised between 0.25 and 10, preferably between 0.65 and 4.

**2.** Herbicidal products according to claim 1, characterized by the fact that the molar ratio of the n-heptanoic esters to the n-butyric esters is 1.

**3.** Herbicidal products according to claim 1, characterized by the fact that the molar ratio of the n-heptanoic esters to the n-butyric esters is 2.

**4.** Herbicidal products according to one of claims 1 to 3, characterized by the fact that the phenoxy-alkanoic acid is constituted by mecoprop, 2.4-MCPA, 2.4-D or 2.4-DP.

**5.** Herbicidal products according to claim 4, characterized by the fact that the phenoxy-alkanoic acid is implemented in the form of butylglycol or iso-octanol ester.

16

6. Method for the preparation of the mixture of bromoxynil or ioxynil n-heptanoic and n-butyric esters being part of the constitution of herbicidal products according to one of claims 1 to 5, characterized by the fact that bromoxynil or ioxynil is reacted with a mixture in suitable proportions of reactive derivatives of n-heptanoic and n-butyric acids.

7. Method according to claim 6, characterized by the fact that the reactive derivatives of the n-heptanoic and n-butyric acids implemented are constituted by anhydrides or acid chlorides of these acids.

8. Method according to claim 6, characterized by the fact that suitable amounts of bromoxynil and/or ioxynil n-heptanoate and n-butyrate are mixed.

9. Method according to claim 6, characterized by the fact that suitable amounts of an already formed mixture having another molar ratio of n-heptanoate and of n-butyrate with either n-heptanoate or n-butyrate are mixed.

10. Herbicidal products according to one of claims 1 to 5, characterized by the fact that they comprise from 100 to 600 g/l of ioxynil and/or bromoxynil equivalent.

11. Herbicidal products according to one of claims 1 to 5, characterized by the fact that they comprise from 50 to 400 g/l of ioxynil and/or bromoxynil equivalent and from 100 to 650 g/l of one or several phenoxy-alkanoic acids in the form of esters and particularly of butylglycol or iso-octanol.

12. Herbicidal products according to one of claims 1 to 5, 10 and 11, characterized by the fact that they comprise one or several solvents and ionic or nonionic emulsifiers.

13. Herbicidal products according to claim 12, characterized by the fact that they comprise, as solvents, petroleum hydrocarbons, particularly their aromatic and paraffinic constituents, or animal, vegetable and synthetic oils.

14. Herbicidal products according to claim 13, characterized by the fact that the solvent used is constituted by a mineral oil having a weight content of aromatic products of at least 70% and a flash point higher than 50°C.

15. Herbicidal products according to claim 12, characterized by the fact that they comprise, as emulsifiers, sulphoricinoleates, quaternary ammonium derivatives, products based on condensates of ethylene oxide with propylene oxide or with alkylphenols, carboxylic esters of anhydrosorbitols possibly polyethoxylated, alkaline, alkaline-earth or ammonium salts of sulphuric esters, sulphonic derivatives with high molecular weight selected from among lignosulphonates and sodium and calcium alkylbenzene-sulfonates.

16. Herbicidal products according to claim 15, characterized by the fact that emulsifiers are used in the proportion of 0.1 to 20% weight/weight in hydrocarbons or in short alcohols.

17. Herbicidal products according to one of claims 1 to 5 and 10 to 16, characterized by the fact that they comprise another herbicide.

18. Herbicidal products according to claim 17, characterized by the fact that another herbicides are selected from the group consisting of biphenyl-ethers, benzoic acid derivatives, picolinic acid derivatives and triazine derivatives.

19. Spraying fluids for the destruction of alien plants, characterized by the fact that they are obtained by dispersion in water of herbicidal products according to one of claims 1 to 5 and 10 to 18, said spraying fluids containing from 0.05 to 5% by weight/volume of a mixture of bromoxynil and/or ioxynil n-heptanoic and n-butyric esters and from 0.1 to 10% by weight/volume of phenoxy-alkanoic acid esters.

20. Method of destroying alien plants, characterized by the fact that a herbicidal product according to one of claims 1 to 5 and 10 to 19 is implemented at a dose of 50 g to 1 kg/ha of bromoxynil and/or ioxynil equivalent.

17

**Patentansprüche**

1. Herbizide Mittel mit verbesserter Wirksamkeit auf Basis von Oxynilester, dadurch gekennzeichnet, daß sie ein Gemisch von n-Heptansäure- und n-Buttersäureestern von Bromoxynil und/oder Ioxynil im Gemisch mit einer oder mehreren Phenoxyalkansäuren, insbesondere in Form eines Esters oder Salzes, enthalten, wobei das N-Heptanoat von Bromoxynil (oder Ioxynil) und das n-Butyrat von Bromoxynil (oder Ioxynil) in einem Molverhältnis von Bromoxynil- (oder Ioxynil)-n-heptanoat zu Bromoxynil (oder Ioxynil)-n-butyrat von 0,25 bis 10, vorzugsweise 0,65 bis 4, vorliegen.

2. Herbizide Mittel nach Anspruch 1, dadurch gekennzeichnet, daß das Molverhältnis der n-Heptansäureester zu den n-Buttersäureestern 1 beträgt.

3. Herbizide Mittel nach Anspruch 1, dadurch gekennzeichnet, daß das Molverhältnis der n-Heptansäureester zu den n-Buttersäureestern 2 beträgt.

4. Herbizide Mittel nach einem der Ansprüche 1 bis 3, dadurch gekennzeichnet, daß die Phenoxyalkansäure aus Mecoprop, 2,4- MCPA, 2,4-D oder 2,4-DP besteht.

5. Herbizide Mittel nach Anspruch 4, dadurch gekennzeichnet, daß die Phenoxyalkansäure in Form eines Butylglykol- oder Isooctanolesters vorliegt.

6. Verfahren zur Herstellung des n-Heptansäure- und n-Buttersäureestergemisches von Bromoxynil oder Ioxynil, das in die Zusammensetzung der herbiziden Mittel nach einem der Ansprüche 1 bis 5 eingeht, dadurch gekennzeichnet, daß man Bromoxynil oder Ioxynil mit einem Gemisch von reaktionsfähigen Derivaten der n-Heptansäure und der n-Buttersäure in entsprechenden Verhältnissen zur Reaktion bringt.

7. Verfahren nach Anspruch 6, dadurch gekennzeichnet, daß die eingesetzten reaktionsfähigen Derivate der n-Heptansäure und der n-Buttersäure durch die Säureanhydride oder Säurechloride dieser Säuren gebildet sind.

8. Verfahren nach Anspruch 6, dadurch gekennzeichnet, daß man entsprechende Mengen des n-Heptanoats und des n-Butyrats von Bromoxynil und/oder Ioxynil vermischt.

9. Verfahren nach Anspruch 6, dadurch gekennzeichnet, daß man geeignete Mengen eines in einem anderen Molverhältnis von n-Heptanoat und n-Butyrat bereits vorliegenden Gemisches entweder mit n-Heptanoat oder mit n-Butyrat vermischt.

10. Herbizide Mittel nach einem der Ansprüche 1 bis 5, dadurch gekennzeichnet, daß sie 100 bis 600 g/l an Ioxynil- und/oder Bromoxyniläquivalent enthalten.

11. Herbizide Mittel nach einem der Ansprüche 1 bis 5, dadurch gekennzeichnet, daß sie 50 bis 400 g/l Ioxynil- und/oder Bromoxyniläquivalent und 100 bis 650 g/l einer oder mehrerer Phenoxyalkansäuren in Esterform, insbesondere von Butylglykol oder Isoocatanol enthalten.

12. Herbizide Mittel nach einem der Ansprüche 1 bis 5, 10 und 11, dadurch gekennzeichnet, daß sie ein oder mehrere Lösungsmittel und ionische oder nicht-ionische Emulgiermittel enthalten.

13. Herbizide Mittel nach Anspruch 12, dadurch gekennzeichnet, daß sie als Lösungsmittel Erdölkohlenwasserstoffe, insbesondere aromatische und paraffinische Bestanteile, oder tierische, pflanzliche und synthetische Öle enthalten.

14. Herbizide Produkte nach Anspruch 13, dadurch gekennzeichnet, daß das verwendete Lösungsmittel aus einem Mineralöl mit einem Gewichtsanteil an aromatischen Produkten von wenigstens 70 % und einem Flammpunkt von über 50 ° C besteht.

15. Herbizide Mittel nach Anspruch 12, dadurch gekennzeichnet, daß sie als Emulgiermittel Sulforicinoleate, quaternäre Ammoniumderivate, Kondensationsprodukte von Ethylenoxid mit Propylenoxid oder Alkylphenolen, gegebenenfalls polyethoxylierte Anhydrosorbitcarbonsäureester, Alkali-, Erdalkali- oder Ammoniumsalze von Schwefelsäureestern oder unter den Lignosulfonaten und den Natrium - und Calciumalkylbenzolsulfonaten ausgewählte hochmolekulare Sulfonsäurederivate enthalten.

16. Herbizide Produkte nach Anspruch 15, dadurch gekennzeichnet, daß die emulgierenden Mittel in einer Menge von 0,1 bis 20 %, in Gewicht/Gewicht, in den Kohlenwasserstoffen oder den kurzen Alkoholen verwendet werden.

17. Herbizide Mittel nach einem der Ansprüche 1 bis 5 und 10 bis 16, dadurch gekennzeichnet, daß sie ein weiteres Herbizid enthalten.

18. Herbizide Mittel nach Anspruch 17, durch gekennzeichnet, daß die anderen Herbizide aus der Familie der Biphenylether, den Benzoesäurederivaten, den Picolinsäurederivaten und den Triazinderivaten ausgewählt sind.

19. Sprühmittel zur Zerstörung von Unkräutern, dadurch gekennzeichnet, daß sie durch Dispergieren der herbiziden Mittel nach einem der Ansprüche 1 bis 5 und 10 bis 18 in Wasser erhalten werden, wobei diese Sprühmittel 0,05 bis 5 % Gewicht/Volumen eines Gemisches von n-Heptansäure- und n-Buttersäureestern von Bromoxynil und/oder Ioxynil und 0,1 bis 10 % Gewicht/Volumen Phenoxyalkansäureester enthalten.

20. Verfahren zur Vernichtung von Unkräutern, dadurch gekennzeichnet, daß man ein herbizides Mittel nach einem der Ansprüche 1 bis 5 und 10 bis 19 in einer Dosis von 50 g bis 1 kg/ha Bromoxynil- und/oder Ioxyniläquivalent anwendet.

# FIG.1.

# FIG.2.